# EUROPEAN PATENT APPLICATION

(11) **EP 1 394 771 A1**
(43) Date of publication of application: **03.03.2004**
(21) Application number: 03708563.6
(22) Date of filing: 12.03.2003
(51) Int. Cl.: G10L 15/28

(54) **SPEECH RECOGNITION CONVERSATION SELECTION DEVICE, SPEECH RECOGNITION CONVERSATION SYSTEM, SPEECH RECOGNITION CONVERSATION SELECTION METHOD, AND PROGRAM**

(30) Priority: 04.04.2002 JP 2002102274
(71) Applicant: NEC Corporation, Minato-ku, Tokyo 108-8001 (JP)
(72) Inventor: Yamada, Eiko, Tokyo 108-8001 (JP); Hagane, Hiroshi, Tokyo 108-8001 (JP)
(74) Representative: Betten & Resch
(86) International application number: PCT/JP2003/002952
(87) International publication number: WO 2003/085640

(57) **Abstract**

In a voice recognition dialogue system having a plurality of recognition dialogue servers, there is no framework to select and determine one recognition dialogue server. A client 10 transmits its ability information stored in a terminal information storage 140 to a recognition dialogue selecting server 20. The ability of the client 10 includes a CODEC ability(CODEC type, CODEC compression mode, etc.), a voice data format(compressed voice data, feature vector, etc.), a recorded voice I/O function, a synthesized voice I/O function(without synthesizing engine, with intermediate representation input engine, with character string input engine, etc.), and service contents. The recognition dialogue selecting server 20 receives the ability information transmitted from the client 10, and determines the optimum recognition dialogue server according to ability information of plural recognition dialogue servers which has been stored in a recognition dialogue server information storage 230 and information of the requested service contents.

## Description

### Technical Field

The present invention relates to a voice recognition dialogue apparatus, a voice recognition dialogue selecting method, a voice recognition dialogue selecting apparatus, and a recording medium for a voice recognition dialogue selecting program, by which voice data input into a terminal(client) such as a mobile phone, an automotive terminal or the like is transmitted to a recognition dialogue server over a network, and a voice dialogue is performed at the recognition dialogue server through voice recognition and responses.

### Related Art

Conventionally, a voice recognition dialogue system using VoIP(Voiceover Internet Protocol) has been known as a server-client type voice recognition dialogue apparatus, by which voice data output from a client is transmitted to a recognition dialogue server over a packet network, and voice recognition dialogue processing is performed at the recognition dialogue server. This type of voice recognition dialogue system is explained in detail in, for example, Nikkei Internet Technology, pp.130-137, March 1998.

In the system using the VoIP, voice recognition or a voice dialogue through voice recognition and response(synthesized, recorded voice, etc.) are performed in a framework in which the IP addresses of the client and the recognition dialogue server have already been known. In such a framework, a voice recognition dialogue is performed in a condition that the client and the recognition dialogue server are connected using the IP addresses each other so as to enable a packet communications, and a packet of voice data is transmitted from the client to the recognition dialogue server.

In the Japanese Patent Laid-open No.10-333693, a method of providing an automatic speech recognition service and a system therefor are disclosed. This system is so built that voice data is recognized through being transmitted from a client to a voice recognition server over a packet network.

However, in the aforementioned conventional system using the VoIP, the voice recognition and the voice dialogue are performed in the framework in which the IP addresses of the client and the recognition dialogue server have already been known. Therefore, in a case where a plurality of recognition dialogue servers exist, it is required to newly develop a system for selecting a recognition dialogue server which is optimum for the client server and associating the recognition dialogue server to the client.

Similarly, as for the method of providing an automatic speech recognition service and the system therefor disclosed in the Japanese Patent Laid-open No. 10-333693, it is also required to newly develop a system for selecting a recognition dialogue server optimum for the client and associating the recognition dialogue server to the client, when there exist a plurality of recognition dialogue servers.

An object of the present invention is to provide a voice recognition dialogue apparatus, a voice recognition dialogue selecting method, a voice recognition dialogue selecting apparatus, and a recording medium for a voice recognition dialogue selecting program, which, when a plurality of recognition dialogue servers exist, are capable of selecting the optimum recognition dialogue server by referring to the ability of a client and the abilities of the recognition dialogue servers, and are capable of performing a voice recognition dialogue between the determined recognition dialogue server and the client.

### Disclosure of the Invention

In order to achieve the aforementioned object, the voice recognition dialogue apparatus of the present invention comprises: a plurality of dialogue means for performing a voice recognition dialogue; a transmitting means for transmitting voice information to the dialogue means; a network which connects the transmitting means and the dialogue means; and a selecting means for selecting one dialogue means among the plurality of dialogue means according to the ability of the transmitting means and the abilities of the plurality of dialogue means.

Further, the voice recognition dialogue apparatus of the present invention may comprise: a plurality of dialogue means for performing a voice recognition dialogue; a requesting means for requesting services to the dialogue means; a transmitting means for transmitting voice information to the dialogue means; a network which connects the transmitting means, the requesting means and the dialogue means; and a selecting means for selecting one dialogue means among the plurality of dialogue means according to the service and abilities of the transmitting means and the abilities of the plurality of dialogue means.

Further, the voice recognition dialogue apparatus of the present invention may comprise: a plurality of dialogue means for performing a voice recognition dialogue; a service retaining means for retaining service contents requested to the dialogue means; a transmitting means for transmitting voice information to the dialogue means; a network which connects the service retaining means, the transmitting means and the dialogue means; and a selecting means for selecting one dialogue means among the plurality of dialogue means according to the service and abilities of the transmitting means and abilities of the plurality of dialogue means.

It is preferable that the selecting means used in the aforementioned voice recognition dialogue apparatus have functions of transmitting information for specifying the selected dialogue means to the transmitting means, and exchanging information necessary for performing a voice recognition dialogue between the dialogue means and the transmitting means. Instead of the selecting means, another selecting means, having functions of transmitting information for specifying the selected dialogue means to the transmitting means and exchanging the service contents and voice information between the selected dialogue means and the requesting and transmitting means, may be used. Moreover, as the selecting means, one having a function of changing one selected dialogue means to another selected dialogue means may be used.

As the selecting means, another one having functions of comparing the ability of the transmitting means with the abilities of the plurality of dialogue means and, according to the compared result, determining such a dialogue means with a desired ability that an input format of voice information input into the dialogue means and an output format of the voice information output to the transmitting means coincide with, may be used. As the selecting means, another one having functions of comparing the service and abilities of the transmitting means with the abilities of the plurality of dialogue means and, according to the compared result, determining such a dialogue means with a desired ability that an input format of voice information input into the dialogue means and an output format of the voice information output to the transmitting means coincide with, may be used.

As the voice information output from the transmitting means, it is preferable that voice information formed of digitized voice data, compressed voice data, or feature vector data be used. Further, it is preferable that data for determining the ability of the transmitting means include data of: a CODEC ability, a voice data format, and a recorded/synthesized voice I/O function. It is also preferable that data for determining the ability of the dialogue means include data of: a CODEC ability, a voice data format, a recorded/synthesized voice output function, service contents, a recognition ability and operational information.

More specifically, the voice recognition dialogue apparatus of the present invention may comprise: a plurality of voice recognition dialogue servers for performing a voice recognition dialogue; a client for transmitting service contents requested to the voice recognition dialogue servers and voice information; a voice recognition dialogue selecting server for selecting one dialogue means among a plurality of dialogue means; and a network which connects the client, the voice recognition dialogue servers and the voice recognition dialogue selecting server.

The client may include, a data input unit for inputting data of the voice information and service contents, a terminal information storage for storing ability data of the client, a data communication unit for performing communications between the voice recognition dialogue server and the voice recognition selecting server over the network and transmitting the voice information to the selected voice recognition dialogue server, and a controller for controlling the operation of the client.

The voice recognition dialogue selecting server may include, a data communication unit for performing communications between the client and the voice recognition dialogue server over the network, a recognition dialogue server information storage for storing the ability of each voice recognition dialogue server, and a recognition dialogue server determining unit for reading out the ability data of the client stored in the terminal information storage, comparing the ability data with the ability data of the voice recognition dialogue servers stored in the recognition dialogue server information storage, determining at least one voice recognition dialogue server among the plurality of voice recognition dialogue servers, and transmitting information necessary for specifying the determined voice recognition dialogue server to the client.

The voice recognition dialogue server may include, a voice recognition dialogue executing unit for executing a voice recognition dialogue according to the voice information input from the client, a data communication unit for performing communications between the client and the voice recognition dialogue selecting server over the network, and a controller for controlling the operation of the voice recognition dialogue server.

In this case, the voice recognition dialogue apparatus may include, a service content retaining server which is connected to the network and retains the service contents requested from the client, and a reading unit which is provided in the voice recognition dialogue server and reads into the service contents retained in the service content retaining server. Further, the voice recognition dialogue apparatus may also include a process transferring means, provided in the voice recognition dialogue server, for outputting to the voice recognition dialogue selecting server a request for transferring voice recognition dialogue processing to another voice recognition dialogue server. It is preferable that the voice information output from the client be formed of digitized voice data, compressed voice data, or feature vector data.

Further, it is preferable that data for determining the ability of the client include data of: a CODEC ability, a voice data format, and a recorded/synthesized voice I/O function. It is also preferable that data for determining the ability of the voice recognition dialogue server include data of: a CODEC ability, a voice data format, a recorded/synthesized voice output function, service contents, a recognition ability and operational information.

A voice recognition dialogue selecting method of the present invention is for performing data communications between a transmitting means and a plurality of dialogue means over a network and for performing a process of transmitting voice information data output from the transmitting means to a specific dialogue means, and comprises: a first step of receiving voice information data from the transmitting means; a second step of requesting ability data of the transmitting means to the transmitting means; a third step of transmitting the ability data of the transmitting means from the transmitting means; a fourth step of comparing the ability data from the transmitting means with the ability data of the plurality of dialogue means, and determining a specific dialogue means according to the compared result; a fifth step of informing the transmitting means of information for specifying the determined dialogue means; and a sixth step of performing voice recognition dialogue processing between the transmitting means and the determined dialogue means. In this case, the voice recognition dialogue selecting method may further comprise: a seventh step of transmitting a request, during the voice recognition dialogue processing between the transmitting means and the dialogue means, for transferring a counterpart of the transmitting means from the dialogue means to another dialogue means; an eighth step of requesting the ability data of the transmitting means to the transmitting means; a ninth step of transmitting the ability data of the transmitting means from the transmitting means responding to the request in the eighth step; a tenth step of comparing the ability data of the transmitting means with the ability data of the plurality of dialogue means, and determining a new dialogue means according to the compared result; an eleventh step of informing the transmitting means of information necessary for specifying the dialogue means determined in the tenth step; and a twelfth step of performing the voice recognition dialogue processing between the dialogue means determined in the tenth step and the transmitting means.

Further, the voice recognition dialogue selecting method of the present invention may be structured to perform data communications between a transmitting means, a plurality of dialogue means and a service retaining means over a network, to perform a process of transmitting voice information data output from the transmitting means to a specific dialogue means, and may comprise: a first step of receiving a request for service contents including voice recognition dialogue processing output from the transmitting means; a second step of requesting ability data of the transmitting means to the transmitting means; a third step of transmitting the ability data of the transmitting means from the transmitting means; a fourth step of comparing the ability data of the transmitting means with the ability data of the plurality of dialogue means and determining a specific dialogue means among the plurality of dialogue means according to the compared result; a fifth step of informing the transmitting means of information necessary for specifying the dialogue means determined in the fourth step; a sixth step of performing the voice recognition dialogue processing between the transmitting means and the dialogue means determined in the fourth step; a seventh step of requesting the service contents requested from the transmitting means, from the dialogue means determined in the fourth step to the service retaining means; an eighth step of transmitting the service contents requested in the seventh step to the dialogue means determined in the fourth step; a ninth step of reading into the service contents transmitted in the eighth step by the dialogue means determined in the fourth step; and a tenth step of performing the voice recognition dialogue processing between the transmitting means and the dialogue means determined in the fourth step according to the service contents read into.

In this case, the voice recognition dialogue selecting means may further comprise: an eleventh step of transmitting a request, during the voice recognition dialogue processing between the transmitting means and the dialogue means, for transferring a counterpart of the transmitting means from the dialogue means to another dialogue means; a twelfth step of requesting the ability data of the transmitting means to the transmitting means; a thirteenth step of transmitting the ability data of the transmitting means from the transmitting means; a fourteenth step of comparing the ability data of the transmitting means with the ability data of the plurality of dialogue means, and determining a new dialogue means according to the compared result; a fifteenth step of informing the transmitting means of information necessary for specifying the dialogue means determined in the fourteenth step; and a sixteenth step of performing the voice recognition dialogue processing between the dialogue means determined in the fourteenth step and the transmitting means.

As the voice information, it is preferable that voice information including digitized voice data, compressed voice data, or feature vector data be used. Further, it is preferable that data for determining the ability of the transmitting means include data of: a CODEC ability, a voice data format, a recorded/synthesized voice I/O function and service contents. It is also preferable that data for determining the ability of the dialogue means include data of: a CODEC ability, a voice data format, a recorded/synthesized voice output function, service contents, a recognition ability and operational information.

A voice recognition dialogue selecting apparatus of the present invention may be configured to perform data communications between a transmitting means and a plurality of dialogue means over a network and to include a selecting means for selecting a specific dialogue means and transmitting voice information data output from the transmitting means to the specific dialogue means, in which the selecting means specifies the dialogue means in accordance with the ability of the transmitting means and the abilities of the plurality of dialogue means when selecting.

Further, the voice recognition dialogue selecting apparatus of the present invention may be configured to perform data communications between a transmitting means and a plurality of dialogue means over a network, perform a process of selecting a specific dialogue means and transmitting voice information data output from the transmitting means to the specific dialogue means, and comprise: a first means for receiving voice information from the transmitting means and data indicating that the dialogue means is to be changed; a second means for requesting ability data of the transmitting means to the transmitting means; a third means for transmitting the ability data from the transmitting means responding to the request from the second means; a fourth means for comparing the ability data of the transmitting means with the ability data of the plurality of dialogue means, and determining the dialogue means according to the compared result; and a fifth means for informing the transmitting means of information for specifying the dialogue means determined in the fourth means.

In this case, it is preferable that the voice information include digitized voice data, compressed voice data, or feature vector data. Further, it is preferable that data for determining the ability of the transmitting means include data of: a CODEC ability, a voice data format, a recorded/synthesized voice I/O function and service contents. It is also preferable that data for determining the ability of the dialogue means include data of: a CODEC ability, a voice data format, a recorded/synthesized voice output function, service contents, a recognition ability and operational information.

The present invention may be realized by recording a voice recognition dialogue selecting program into a recording medium. That is to say, a recording medium for a voice recognition dialogue selecting program according to the present invention may be configured to perform data communications between a transmitting means and a plurality of dialogue means over a network, to perform a process of transmitting voice information data output from the transmitting means to a specific dialogue means, and record a voice recognition dialogue selecting program comprising: a first step of receiving the voice information data from the transmitting means; a second step of requesting ability data of the transmitting means to the transmitting means; a third step of transmitting the ability data of the transmitting means from the transmitting means; a fourth step of comparing the ability data from the transmitting means with ability data of the plurality of dialogue means, and determining a specific dialogue means according to the compared result; a fifth step of informing the transmitting means of information for specifying the determined dialogue means; and a sixth step of performing a voice recognition dialogue processing between the transmitting means and the determined dialogue means.

In this case, the recording medium may record the voice recognition dialogue selecting program further comprising: a seventh step of transmitting a request, during the voice recognition dialogue processing between the transmitting means and the dialogue means, for transferring a counterpart of the transmitting means from the dialogue means to another dialogue means; an eighth step of requesting the ability data of the transmitting means to the transmitting means; a ninth step of transmitting the ability data of the transmitting means from the transmitting means responding to the request in the eighth step; a tenth step of comparing the ability data of the transmitting means with the ability data of the plurality of dialogue means, and determining a new dialogue means according to the compared result; an eleventh step of informing the transmitting means of information necessary for specifying the dialogue means determined in the tenth step; and a twelfth step of performing the voice recognition dialogue processing between the dialogue means determined in the tenth step and the transmitting means.

As for the voice recognition dialogue selecting program recorded in the recording medium, it is preferable to use a voice recognition dialogue selecting program for performing data communications between a transmitting means, a plurality of dialogue means and a service retaining means over a network and performing a process of transmitting voice information data output from the transmitting means to a specific dialogue means, which program includes: a first step of receiving a request for service contents including a voice recognition dialogue processing output from the transmitting means; a second step of requesting ability data of the transmitting means to the transmitting means; a third step of transmitting the ability data of the transmitting means from the transmitting means; a fourth step of comparing the ability data of the transmitting means with the ability data of the plurality of dialogue means, and determining a specific dialogue means among the plurality of dialogue means according to the compared result; a fifth step of informing the transmitting means of information necessary for specifying the dialogue means determined in the fourth step; a sixth step of performing the voice recognition dialogue processing between the transmitting means and the dialogue means determined in the fourth step; a seventh step of requesting the service contents requested from the transmitting means, from the dialogue means determined in the fourth step to the service retaining means; an eighth step of transmitting the service contents requested in the seventh step to the dialogue means determined in the fourth step; a ninth step of reading into the service contents transmitted in the eighth step by the dialogue means determined in the fourth step; and a tenth step of performing the voice recognition dialogue processing between the transmitting means and the dialogue means determined in the fourth step according to the service contents read into.

In this case, it is preferable that the voice recognition dialogue selecting program further include: an eleventh step of transmitting a request, during the voice recognition dialogue processing between the transmitting means and the dialogue means, for transferring a counterpart of the transmitting means from the dialogue means to another dialogue means; a twelfth step of requesting the ability data of the transmitting means to the transmitting means; a thirteenth step of transmitting the ability data of the transmitting means from the transmitting means; a fourteenth step of comparing the ability data of the transmitting means with the ability data of the plurality of dialogue means, and determining a new dialogue means according to the compared result; a fifteenth step of informing the transmitting means of information necessary for specifying the dialogue means determined in the fourteenth step; and a sixteenth step of performing the voice recognition dialogue processing between the dialogue means determined in the fourteenth step and the transmitting means. As the voice information, it is preferable that voice information including digitized voice data, compressed voice data, or feature vector data be used. Further, it is preferable that data for determining the ability of the transmitting means include data of: a CODEC ability, a voice data format, a recorded/synthesized voice I/O function and service contents. It is also preferable that data for determining the ability of the dialogue means include data of: a CODEC ability, a voice data format, a recorded/synthesized voice output functions, service contents, a recognition ability and operational information.

A voice recognition dialogue system according to the present invention is a system in which a client and a plurality of recognition dialogue servers are connected over a network. Even in a case that a plurality of recognition dialogue servers exist, it is capable of selecting and determining the optimum recognition dialogue server among the servers, to thereby perform a voice recognition dialogue on the optimum recognition dialogue server.

An example of a method for determining the optimum recognition dialogue serer is, a determining method in which the ability of the client and the abilities of the recognition dialogue servers are compared, to thereby select a recognition dialogue sever which, among such recognition dialogue servers that the outputs/inputs of the client 10 and the recognition dialogue server 30 coincide with, exhibits the highest ability and is in operation.

Data for determining the ability of the client includes data of: a CODEC ability(CODEC type, CODEC compression mode, etc.), a voice data format(compressed voice data, feature vector, etc.), a recorded voice I/O function, a synthesized voice I/O function(without synthesizing engine, with intermediate representation input engine, with character string input engine, etc.), service contents and the like. Data for determining the ability of the recognition dialogue server includes data of: a CODEC ability(CODEC type, CODEC extension mode, etc.), a recorded voice output function, a synthesized voice output function(without synthesizing engine, with intermediate representation output engine, with waveform output engine, etc.), service contents, an ability of a recognition engine(task dedicated engine, dictation engine, command recognition engine, etc.), operational information and the like. The type of CODEC may be AMR-NB, AMR-WB or the like. An Example of the intermediate representation of the synthesized voice is a representation after a character string is converted to a phonetic symbol string. The service contents include such services as an address recognition, a name recognition, a title recognition of an incoming call melody, a telephone number recognition, and a credit card number recognition.

A processing unit which determines a recognition dialogue server may be included in a web server, a recognition dialogue selecting server or a recognition dialogue server, or may be included in a web server or in both the recognition dialogue selecting server and the recognition dialogue server.

According to the present invention, it is possible to perform a voice recognition dialogue using the optimum recognition dialogue server. Further, since the recognition dialogue server itself has an ability to determine a recognition dialogue server, a terminal can automatically access to another appropriate recognition server even in the course of a dialogue.

According to the present invention, it is also possible to receive service contents from servers other than a recognition dialogue server(for example, web servers or servers of content providers), so as to perform a voice recognition dialogue according to the received service contents. The form of the service contents may be VoiceXML document or a service name, as examples.

### Brief Description of the Drawings

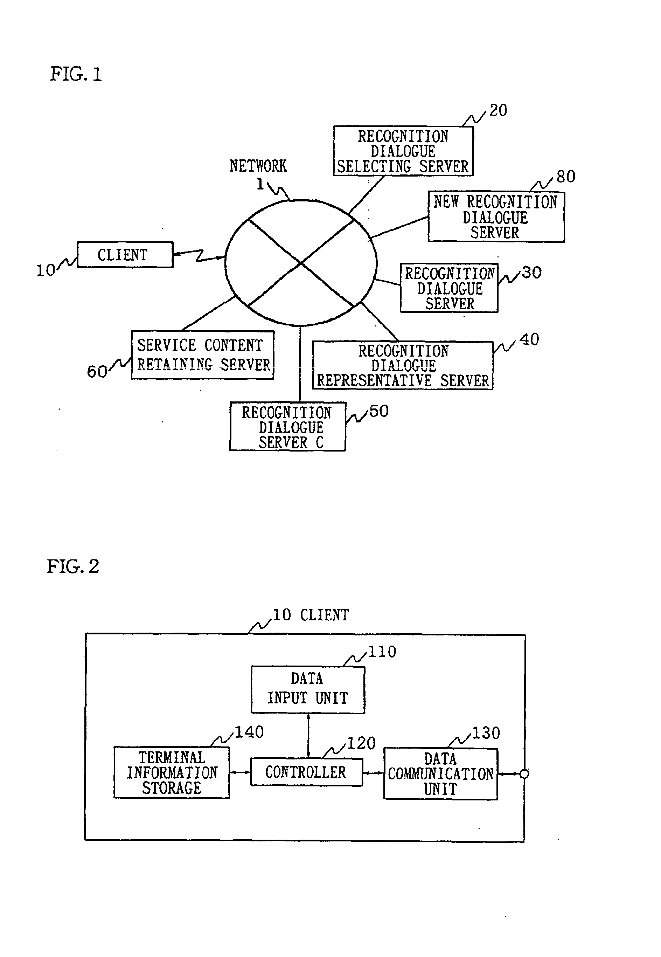

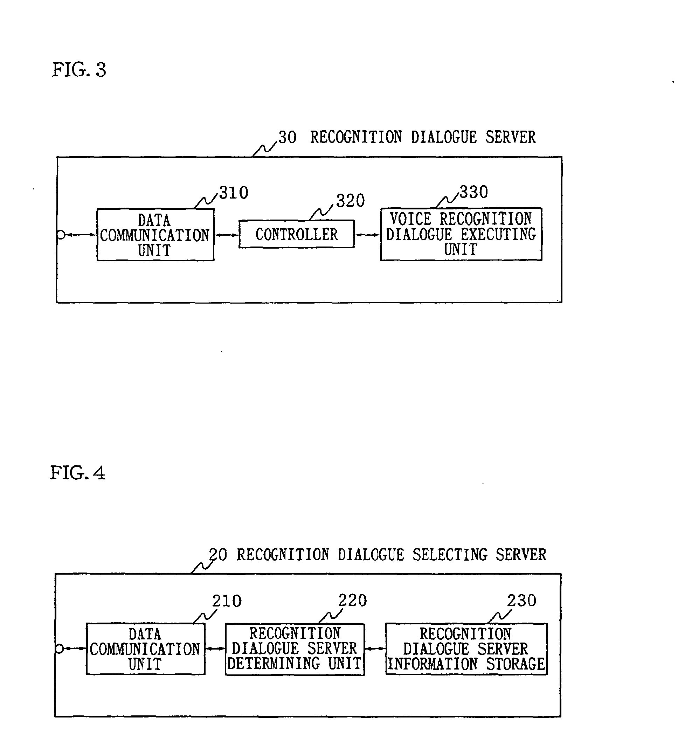

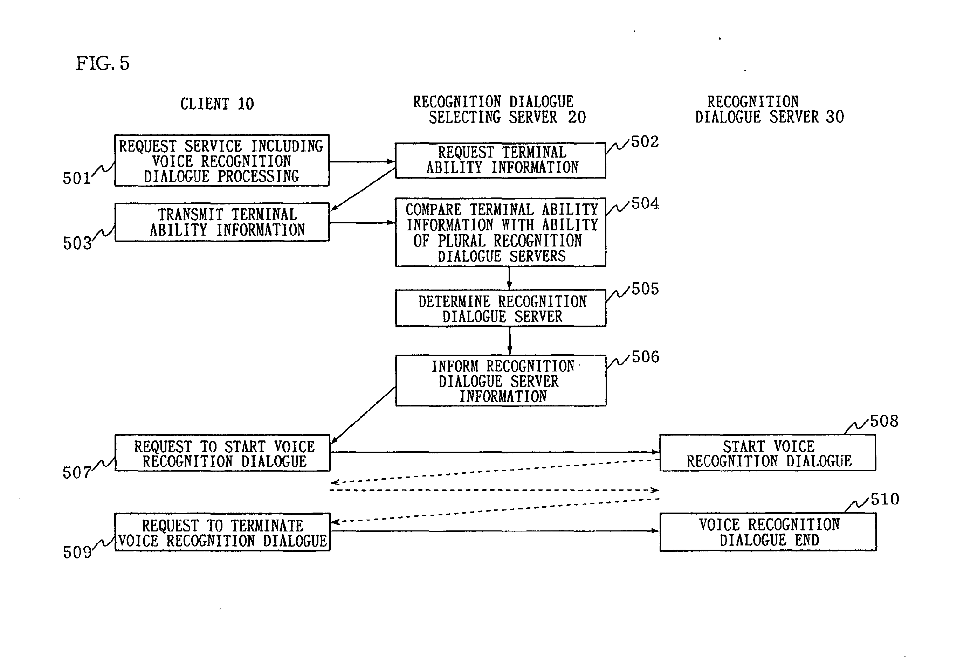

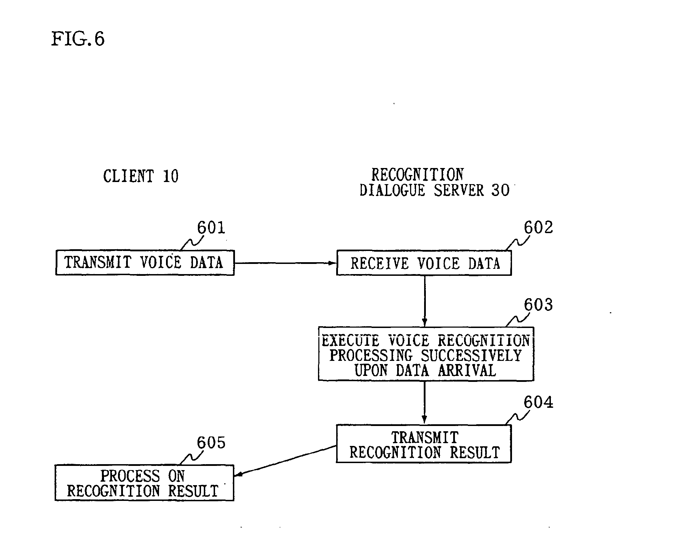

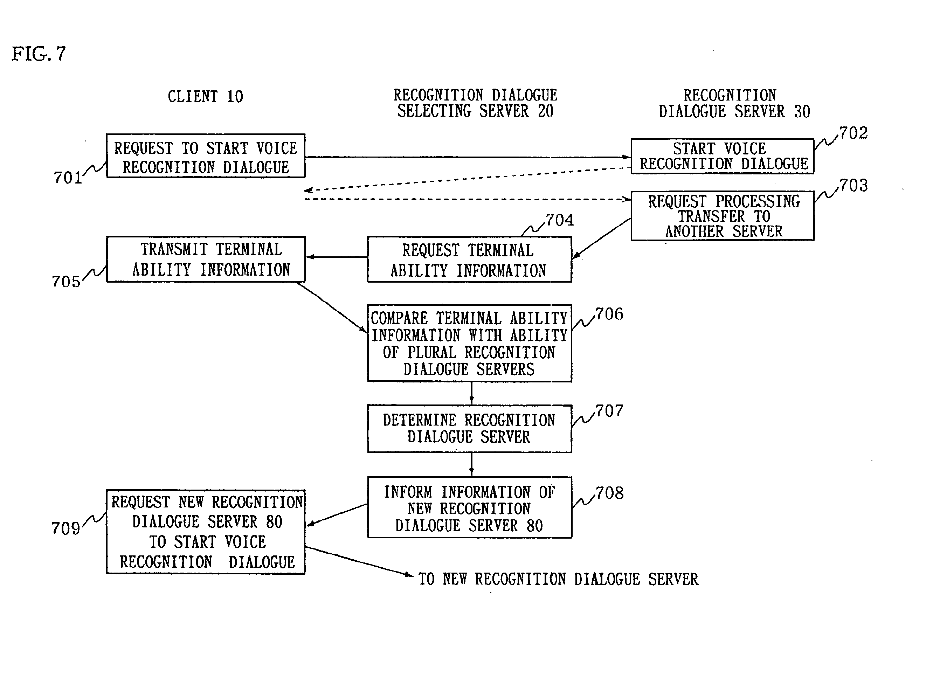

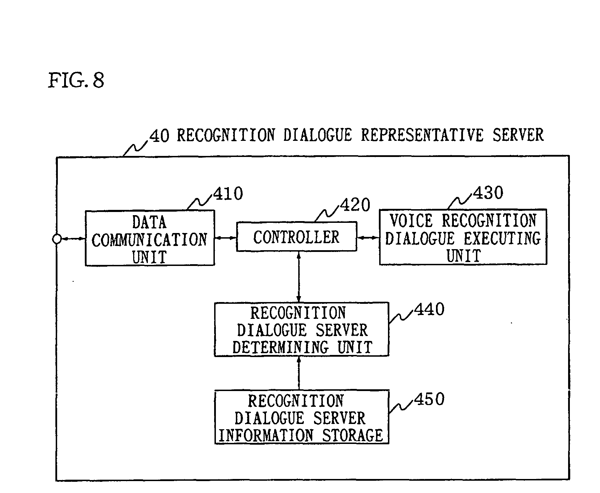

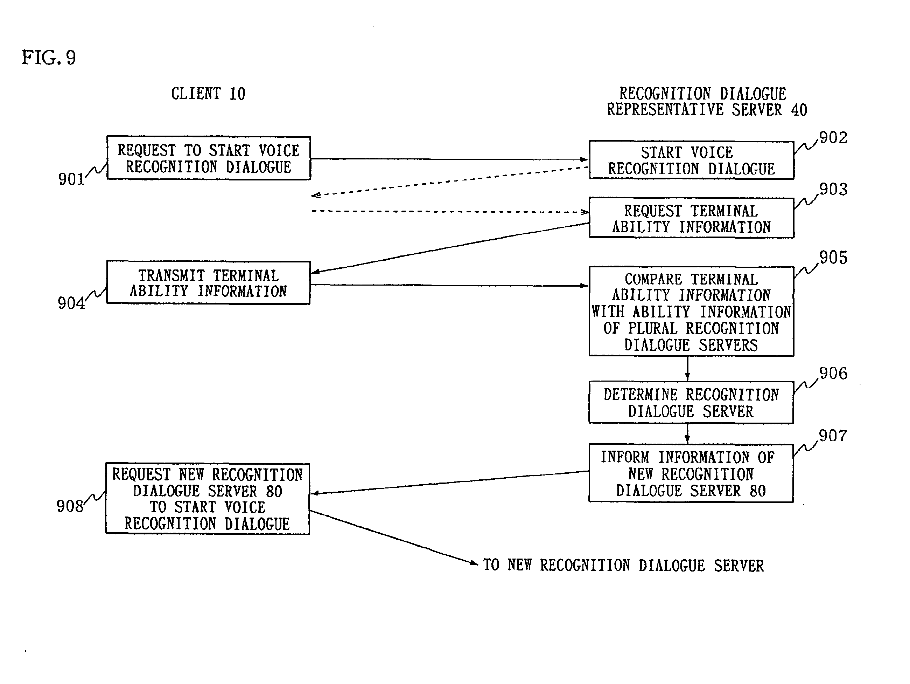

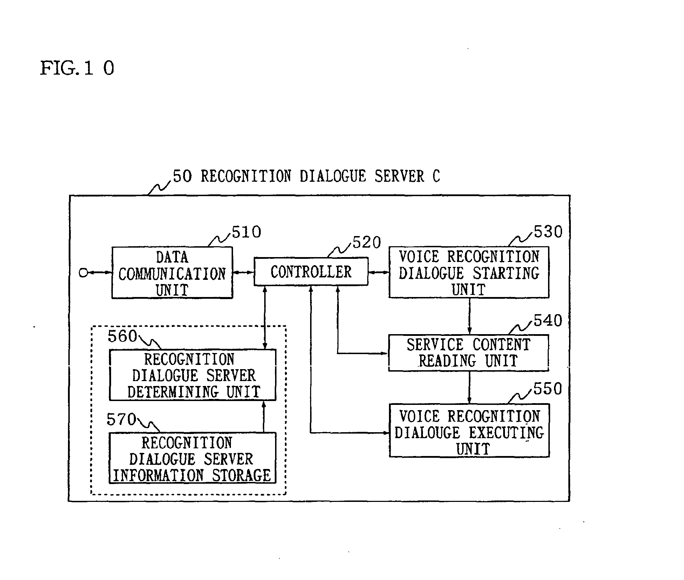

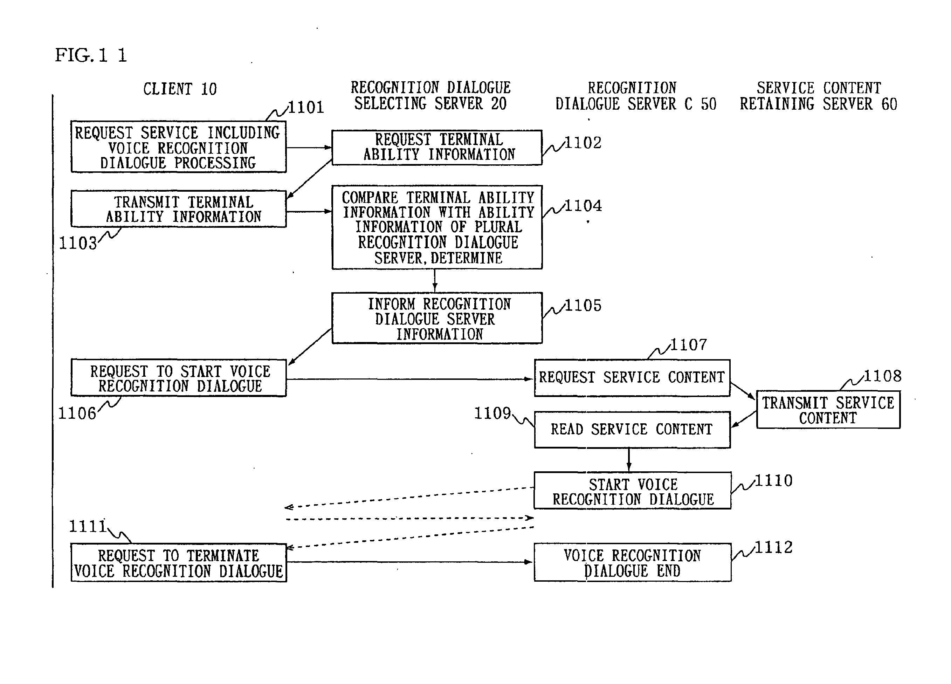

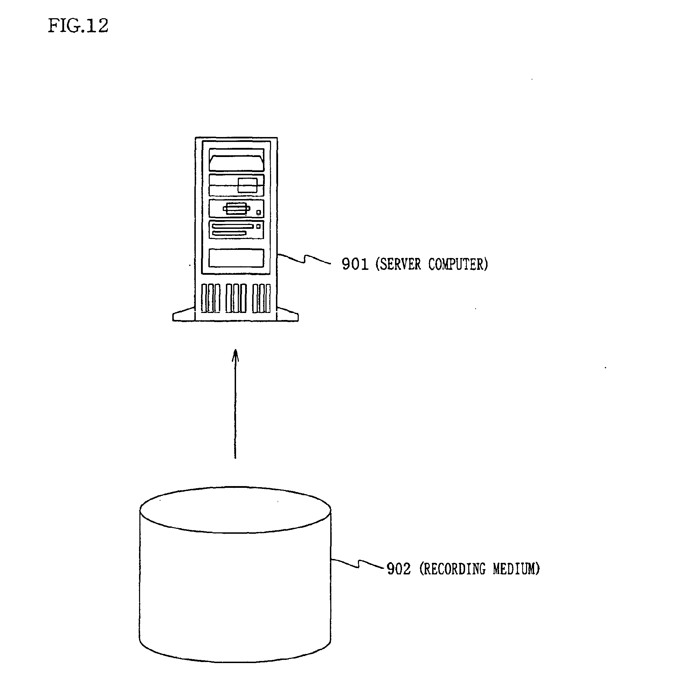

Fig. 1 is a diagram showing the structure of a voice recognition dialogue system of an embodiment according to the present invention. Fig. 2 is a block diagram showing the structure of a client 10 according to the present invention. Fig. 3 is a block diagram showing the structure of a recognition dialogue server 30 of the embodiment according to the present invention. Fig. 4 is a block diagram showing the structure of a recognition dialogue selecting server 20 according to the present invention. Fig. 5 is a flowchart showing a process in a case that a recognition dialogue server is determined at the recognition dialogue selecting server 20 in a voice recognition dialogue system of the embodiment according to the present invention. Fig. 6 is a flowchart showing a process of a voice recognition dialogue in a voice recognition dialogue method of the embodiment according to the present invention. Fig. 7 is a flowchart showing a process in a case that a new recognition dialogue server 80 is determined at the recognition dialogue selecting server 20 during recognition dialogue processing performed at the recognition dialogue server 30 in the voice recognition dialogue system of the embodiment according to the present invention. Fig. 8 is a block diagram showing the structure of a recognition dialogue representative server 40 of the embodiment according to the present invention. Fig. 9 is a flowchart showing a process in a case that the new recognition dialogue server 80 is determined at the recognition dialogue representative server 40 during recognition dialogue processing in the voice recognition dialogue method of the embodiment according to the present invention. Fig. 10 is a diagram showing a recognition dialogue server C 50 of the embodiment according to the present invention, in which a voice recognition dialogue starting unit and a service content reading unit are added to the apparatus shown in Fig. 4. Fig. 11 is a flowchart showing a process in a case that the recognition dialogue server C 50 reads into service contents from a service content retaining server 60 in the voice recognition dialogue method of the embodiment according to the present invention. Fig. 12 is a diagram showing a program for executing the voice recognition dialogue method of the embodiment according to the present invention on a server computer 901, and a recording medium 902 in which the program is recorded.

### Preferred Embodiment of the Invention

An embodiment of the present invention will be explained below in detail with reference to the drawings.

The present invention is, in a voice recognition dialogue system for providing voice recognition dialogue services using networks, a system having functions to select and determine the optimum recognition dialogue server when a plurality of recognition dialogue servers exist.

Next, an embodiment of the present invention will be explained in detail with reference to the drawings. Fig. 1 is a diagram showing the structure of a voice recognition dialogue system of an embodiment according to the present invention. A client 10 connects to a recognition dialogue selecting server 20, a recognition dialogue server 30, a recognition dialogue representative server 40, a recognition dialogue server C 50, a new recognition dialogue server 80 and a service content retaining server 60, over a network 1. Here, the client 10 works as a transmitting means for transmitting voice information and a requesting means for requesting service contents.

The type of network 1 may be Internet(including wire and radio) or Intranet.

Fig. 2 is a block diagram showing the structure of the client 10 of the present invention. The client 10 may be a mobile terminal, a PDA, an automotive terminal, a personal computer or a home terminal. The client 10 is composed of a controller 120 for controlling the client 10, a terminal information storage 140 for retaining the ability of the client 10, and a data communication unit 130 which performs communications over the network 1.

As for data for judging the ability of the client 10, data of: a CODEC ability(CODEC type, CODEC compression mode, etc.), a voice data format(compressed voice data, feature vector, etc.) a recorded voice I/O function, a synthesized voice I/O function(without synthesizing engine, with intermediate representation input engine, with character string input engine, etc.), and service contents, is used.

It should be noted that the client 10 may be provided with a web browser to thereby interface with a user. The data of the service contents includes service data such as an address recognition, a name recognition, a title recognition of an incoming call melody, a telephone number recognition, a credit card number recognition and the like.

Fig. 3 is a block diagram showing the structure of the recognition dialogue server 30 of the embodiment according to the present invention. The recognition dialogue server 30 is composed of a controller 320 for controlling the recognition dialogue server 30, a voice recognition dialogue executing unit 330 for executing voice recognition and dialogues, and a data communication unit 310 for performing communications over the network 1.

Fig. 4 is a block diagram showing the structure of the recognition dialogue selecting server 20 according to the present invention. The recognition dialogue selecting server 20 is composed of a data communication unit 210 which performs communications over the network 1, a recognition dialogue server determining unit 220 for selecting and determining the optimum recognition dialogue server when a plurality of recognition dialogue servers exist, and a recognition dialogue server information storage 230 for storing the ability information of the recognition dialogue server which is selected and determined. Here, the recognition dialogue selecting server 20 constitutes a selecting means for selecting a specific dialogue means among a plurality of dialogue means according to the ability of the client 10 working as the transmitting means and the requesting means and the abilities of the recognition servers working as the dialogue means.

As for data for judging the ability of the recognition dialogue server, data of: a CODEC ability(CODEC type, CODEC extension mode, etc.), a voice data format(compressed voice data, feature vector, etc.) a recorded voice output function, a synthesized voice output function(without synthesizing engine, with intermediate representation input engine, with waveform output engine, etc.), service contents, the ability of a recognition engine (task dedicated engine, dictation engine, command recognition engine, etc.), and operational information are used.

The new recognition dialogue server 80 is the same as any one of the recognition dialogue server 30, the recognition dialogue representative server 40, or the recognition dialogue server C 50.

The recognition dialogue selecting server 20, the recognition dialogue server 30, the recognition dialogue representative server 40, the recognition dialogue server C 50 and the new recognition dialogue server 80 may be computers based on Windows (registered trademark) NT or Windows (registered trademark) 2000, or servers based on Solalis (registered trademark), as OSs. The structures of the recognition dialogue representative server 40 and the recognition dialogue server C 50 will be explained later. The recognition dialogue selecting server 20, the recognition dialogue server 30, the recognition dialogue representative server 40, the recognition dialogue server C 50, the new recognition dialogue server 80 and the like work as the above-described dialogue means.

Next, the operation of the voice recognition dialogue system of the embodiment according to the present invention will be explained.

At first, an explanation will be given for a case that the recognition dialogue selecting server 20 performs processing for determining a recognition dialogue server 30 for performing voice recognition and dialogues, and the voice recognition dialogue processing is performed in the determined recognition dialogue server 30. Fig. 5 is a flowchart showing a process in a case that the recognition dialogue server 30 is determined at the recognition dialogue selecting server 20 in the voice recognition dialogue system of the embodiment according to the present invention.

First, the client 10 requests services including voice recognition dialogue processing to the recognition dialogue selecting server 20 (step 501). More specifically, CGI URL of a program executing the services and an argument required for the processing are transmitted using an HTTP command and the like from the data communication unit 130 in the client 10 to the recognition dialogue selecting server 20.

Next, upon receipt of the service requirement from the client 10, the recognition dialogue selecting server 20 requests ability information of the client 10 (step 502).

Next, upon receipt of the request for the ability information from the recognition dialogue selecting server 20, the client 10 transmits the ability information of the client 10 stored in the terminal information storage 140 from the data communication unit 130 to the recognition dialogue selecting server 20 via the controller 120 (step 503). The ability of the client 10 includes a CODEC ability(CODEC type, CODEC compression mode, etc.), a voice data format(compressed voice data, feature vector, etc.), a recorded voice I/O function, a synthesized voice I/O function(without synthesizing engine, with intermediate representation input engine, with character string input engine, etc.), service contents and the like.

The recognition dialogue selecting server 20 receives the ability information of the client 10 transmitted from the client 10 and reads out ability information of the plurality of recognition dialogue servers which have been stored in the recognition dialogue server information storage 230. Then, the recognition dialogue selecting server 20 compares the ability information of the client 10 with the ability information of the plurality of recognition dialogue servers at the recognition dialogue server determining unit 220 (step 504), to thereby determine the optimum recognition dialogue server by additionally considering the information of the service contents requested from the client 10 (step 505).

As for the ability of the recognition dialogue server, a CODEC ability (CODEC type, CODEC extension mode, etc.), a voice data format (compressed voice data, feature vector, etc.) a recorded voice output function, a synthesized voice output function (without synthesizing engine, with intermediate representation output engine, with waveform output engine, etc.), service contents, the ability of a recognition engine (task dedicated engine, dictation engine, command recognition engine, etc.), operational information and the like are included.

An example of a method for determining the optimum recognition dialogue serer 30 is, a determining method in which the ability of the client 10 and the abilities of the recognition dialogue servers are compared, to thereby select a recognition dialogue sever which, among such recognition dialogue servers that the outputs/inputs of the client 10 and the recognition dialogue server 30 coincide with, exhibits the highest ability and is in operation. Further, in a case that the recognition dialogue server 30 exists per a service content, for example, dedicated servers such as an address task server, a name task server, a telephone number task server and a card ID task server exist, a method of selecting recognition dialogue servers capable of executing the service contents requested from the client 10 may be another example of the determining method.

Next, the recognition dialogue selecting server 20 informs the information of the recognition dialogue server determined at the recognition dialogue server determining unit 220 to the client 10 (step 506). As an example of the informing method, there is a method of informing the address of the recognition dialogue server 30 or the address of the executing program for executing the recognition dialogue on the recognition dialogue server 30 by embedding it into an HTML screen or the like.

Next, the client 10 receives information of the recognition dialogue server 30 from the recognition dialogue selecting server 20, and requests to initiate the voice recognition dialogue to the recognition dialogue server 30, the information of which is informed (step 507). As an example of a requesting method for initiating the voice recognition dialogue, there is a method of transmitting the address URL of the executing program for executing the recognition dialogue and an argument required for executing the voice recognition dialogue by a POST command of HTTP. Examples of the argument include, a document in which service contents are described (VoiceXML, etc.), a service name, and a command for executing the voice recognition dialogue.

Next, upon receipt of the request for starting the voice recognition dialogue from the client 10, the recognition dialogue server 30 executes the voice recognition dialogue (step 508). In Fig. 5, the dotted lines connecting the step 508 and the step 509 show that data is exchanged between the terminal and the recognition dialogue server for several times. The voice recognition dialogue processing will be explained in detail later with reference to Fig. 6.

When terminating the voice recognition dialogue, the client 10 requests to terminate the recognition dialogue (step 509). Examples of requesting a recognition dialogue termination include a method of transmitting the address of the executing program for terminating the recognition dialogue using a POST command of HTTP, and a method of transmitting the address of the executing program for executing the recognition dialogue and a command for terminating the recognition dialogue using a POST command of HTTP. The recognition dialogue server receives the request for terminating the voice recognition dialogue from the client 10 and terminates the voice recognition dialogue (step 710).

Next, the voice recognition dialogue processing will be explained. Fig. 6 is a flowchart showing the processing of the voice recognition dialogue in the voice recognition dialogue method of the embodiment according to the present invention.

First, a voice input into the data input unit 110 in the client 10 is transmitted to the controller 120, and the controller 120 performs data processing. Examples of the data processing include digitizing, a voice detection, and voice analyzing.

Next, the processed voice data is transmitted from the data communication unit 210 to the recognition dialogue server (step 601). Examples of the voice data include digitized voice data, compressed voice data, and a feature vector.

In the recognition dialogue server 30, the data communication unit 310 receives the voice data successively transmitted from the client 10 (step 602), and the controller 320 determines the voice data as voice data and transmits it to the voice recognition dialogue executing unit 330. The voice recognition dialogue executing unit 330, having a recognition engine, a dictionary for recognition, a synthesizing engine, a dictionary for synthesizing and the like required for the voice recognition dialogue, performs the voice recognition dialogue processing successively (step 603).

Contents of the voice recognition dialogue processing will be changed depending on the type of the voice data transmitted from the client 10. For example, in a case of the transmitted voice data being the compressed voice data, an extension of the compressed data, voice analyzing and recognition processing are performed. In a case that a feature vector is transmitted, only voice recognition processing is performed. Upon completion of the recognition processing, the output recognition result is transmitted to the client 10 (step 604). The format of the recognition result may be a text, a synthesized/recorded voice coinciding with the text, a URL screen reflecting the recognized contents, or the like. The client 10 processes the recognized result received from the recognition dialogue server 30 in accordance with the format of the recognized result (step 605). For example, a voice is output when the format of the recognized result is the synthesized or recorded voice, and a screen is displayed when the format of the recognized result is the URL screen.

In this way, the process from the step 601 to the step 605 is repeated for the several times, so that the voice dialogue is proceeded.

Secondly, an explanation will be given for a case that the recognition dialogue server 30 performing the voice recognition dialogue processing is to be substituted with another new recognition dialogue server 80 in the voice recognition dialogue system of the embodiment according to the present invention.

Fig. 7 is a flowchart showing a process in a case that a new recognition dialogue server 80 is determined at the recognition dialogue selecting server 20 during a recognition dialogue processing performed by the recognition dialogue server 30 in the voice recognition dialogue system of the embodiment according to the present invention.

In Fig.7, when it becomes necessary to perform processing at the new recognition dialogue server 80 after several times of data exchange between the client 10 and the recognition dialogue server 30, the recognition dialogue server 30 requests a processing transfer to the new recognition dialogue server 80 to the recognition dialogue selecting server 20 (step 703). In the Fig. 7, the dotted lines connecting the step 702 and the step 703 show that data exchange between the terminal and the recognition dialogue server is performed several times.

The request for a server transfer may arise when the service contents are changed during a dialogue, an inconsistency arises between the service contents and the server ability, a fault occurs in the recognition dialogue server, or the like.

Next, the recognition dialogue selecting server 20 requests ability information of the client 10 to the client 10 (step 704).

Upon receipt of the request for the ability information from the recognition dialogue selecting server 20, the client 10 transmits the ability information of the client 10 stored in the information storage 140 of the client 10 from the data communication unit 130 to the recognition dialogue server via the controller 120 (step 705).

The recognition dialogue selecting server 20 receives the ability information of the client 10 transmitted from the client 10, reads out ability information of the plurality of recognition dialogue servers which has been stored in the recognition dialogue server information storage 230, compares the ability information of the client 10 with the abilities of the plurality of recognition dialogue servers at the recognition dialogue server determining unit 220 (step 706), to thereby determine the optimum recognition dialogue server by additionally considering information of the service contents which causes the transfer request from the recognition dialogue server (step 707). The methods of determining the ability information of the client 10, the ability information of the recognition dialogue servers, and the recognition dialogue server are the same as aforementioned.

Next, the recognition dialogue selecting server 20 informs the client 10 of information of the new recognition dialogue server 80 determined at the recognition dialogue server determining unit 220 (step 708). An example of the informing method is to inform by embedding into the HTML screen or the like, the address of the new recognition dialogue server 80 or the address of the executing program for executing the recognition dialogue on the new recognition dialogue server 80.

Next, the client 10 receives the information of the address of the new recognition dialogue server 80, and requests the informed new recognition dialogue server 80 to start of the voice recognition dialogue (step 709). An example of the method for requesting to start the voice recognition dialogue is to transmit the URL address of the executing program for executing the recognition dialogue and an argument required for executing the voice recognition dialogue using a POST command of HTTP.

Thirdly, in the voice recognition dialogue system of the embodiment according to the present invention, the above-described recognition dialogue selecting server 20 and the recognition dialogue server 30 may be provided in the same server so as to form a recognition dialogue representative server 40, which is capable of performing a voice recognition dialogue and selecting an appropriate voice recognition dialogue server.

Fig. 8 is a block diagram showing the structure of the recognition dialogue representative server 40 of the embodiment according to the present invention.

As shown in Fig. 8, the recognition dialogue representative server 40 is so formed that a recognition dialogue server determining unit 440 and a recognition dialogue server information storage 450 are added to the recognition dialogue server 30 shown in Fig. 3. The other components, that is, a data communication unit 410, a controller 420 and a voice recognition dialogue executing unit 430 are the same as the corresponding components in Fig. 3.

The controller 420, the voice recognition dialogue executing unit 430 for executing voice recognition and dialogues, and the data communication unit 410 for performing communications over the network 1 are the same as the controller 320, the voice recognition dialogue executing unit 330 for executing voice recognition and dialogues, and the data communication unit 310 for performing communications over the network 1, respectively.

The recognition dialogue server determining unit 440 selects and determines the optimum recognition dialogue server when a plurality of recognition dialogue servers exist. The recognition dialogue server information storage 450 stores ability information of a recognition dialogue server which is selected and determined. Examples of the ability of the recognition dialogue server include, a CODEC ability(CODEC type, CODEC compression mode, etc.), a voice data format(compressed voice data, feature vector, etc.) a recorded voice output function, a synthesized voice output function(without synthesizing engine, with intermediate representation output engine, with waveform output engine, etc.), service contents, the ability of a recognition engine(task dedicating engine, dictation engine, command recognition engine, etc.), operational information and the like, as same as the first case.

In this case, the recognition dialogue representative server 40 performs the processing shown in Fig. 5 by its own.

Next, an explanation will be given for a case that the recognition dialogue representative server 40 performing the voice recognition dialogue processing is substituted with another new recognition dialogue server 80, by which the voice recognition dialogue processing is to be performed.

Fig. 9 is a flowchart showing a processing to determine the new recognition dialogue server 80 at the recognition dialogue representative server 40 during a recognition dialogue processing, in the voice recognition dialogue method of the embodiment according to the present invention.

Referring to Fig. 9, when it becomes necessary to perform processing at the new recognition dialogue server 80 after several times of data exchange between the terminal and the recognition dialogue server, the recognition dialogue representative server 40 requests ability information of the client 10 to the client 10 (step 903). In Fig. 9, the dotted lines connecting the step 902 and the step 903 show that data exchange between the terminal and the recognition dialogue server is performed several times.

The request for the ability information of the client 10 may arise when the service contents are changed during a dialogue, an inconsistency arises between the service contents and the server ability, a fault occurs in the recognition dialogue server, or the like.

Next, upon receipt of the ability information request from the recognition dialogue representative server 40, the client 10 transmits the ability information of the client 10 stored in the terminal information storage 140 from the data communication unit 130 to the recognition dialogue representative server 40 via the controller 120 (step 904).

The recognition dialogue representative server 40 receives the ability information of the client 10 transmitted from the client 10, reads out ability information of the plurality of recognition dialogue servers store in the recognition dialogue server information storage 450, compares the ability information of the client 10 with the ability information of the plurality of recognition dialogue servers at the recognition dialogue server determining unit 440 (step 905), to thereby determines the optimum recognition dialogue server by additionally considering the information of the service contents requested from the client 10 (step 906). The ability information of the client 10, the ability information of the recognition dialogue servers, and the method of determining the recognition dialogue server are the same as aforementioned.

Next, the recognition dialogue representative server 40 informs information of the new recognition dialogue server 80 determined at the recognition dialogue server determining unit 440 to the client 10 (step 907). An example of the informing method is to inform by embedding into an HTML screen or the like the address of the new recognition dialogue server 80 or the address of the executing program for executing the recognition dialogue on the new recognition dialogue server 80.

Next, the client 10 receives the information of the address of the new recognition dialogue server 80 and requests the informed new recognition dialogue server 80 to start the voice recognition dialogue (step 908). An example of the method for requesting to start the voice recognition dialogue is to transmit the address URL of the executing program for executing the recognition dialogue and an argument required for executing the voice recognition dialogue using a POST command of HTTP.

Fourthly, in the voice recognition dialogue system of the embodiment according to the present invention, an explanation will be given for a case that a recognition dialogue server C 50 reads into service contents from a service content retaining server 60 such as a content provider. In this case, the service content retaining server 60 may be provided in the recognition dialogue selecting server 20 to thereby form a web server in which the web is used as an interface for providing services to a user. Further, in this case, the client 10 may be provided with a web browser as an interface for selecting or inputting service contents.

Fig. 10 is a diagram showing a recognition dialogue server C(recognition dialogue server apparatus) 50 of the embodiment according to the present invention. The recognition dialogue server apparatus 50 shown in Fig. 10 is so configured that a voice recognition dialogue starting unit 530 and a service content reading unit 540 are added to the recognition dialogue representative server 40 shown in Fig. 8. The other components such as a data communication unit 510, a controller 520, a voice recognition dialogue executing unit 530, a recognition dialogue server determining unit 560, and a recognition dialogue server information storage 570 are the same as the corresponding components in Fig. 8.

The voice recognition dialogue starting unit 530 starts the voice recognition dialogue processing and requests service contents to a server for retaining service contents in accordance with the service information transmitted from the client 10. The service contents include an address recognition, a name recognition, a title recognition of an incoming call melody, a telephone number recognition and a credit card number recognition.

The service content reading unit 540 reads into the service contents from the service content retaining server 60. The voice recognition dialogue executing unit 550, the controller 520, and the data communication unit 510 are the same as the voice recognition dialogue executing unit 430, the controller 420, and the data communication unit 410, respectively. The recognition dialogue server information storage 570 and the recognition dialogue server determining unit 560 may not be provided. In this case, a decision of one recognition dialogue server is performed by the recognition dialogue selecting server 20. In a case that the recognition dialogue server information storage 570 and the recognition dialogue server determining unit 560 are provided, these are the same as the recognition dialogue server information storage 450 and the recognition dialogue server determining unit 440, respectively.

Fig. 11 is a flowchart showing a process in which the recognition dialogue server C 50 reads into the service contents from the service content retaining server 60 in the voice recognition dialogue method of the embodiment according to the present invention.

A process from the step 1101 to the step 1105 in Fig. 11 are the same as the process from the step 501 to the step 506 as explained above.

Next, according to information of the recognition dialogue server C 50 informed from the recognition dialogue selecting server 20, the client 10 requests the recognition dialogue server C 50 to start the voice recognition dialogue (step 1106). When requesting, the service information is transmitted.

As an example of the method for requesting to start the voice recognition dialogue is to transmit the URL address of the execution program for executing the recognition dialogue and the service content information using a POST command of HTTP. The service content information includes a document describing the service contents(VoiceXML, etc.) and a service name.

Next, the recognition dialogue server C 50 receives the request from the client 10 at the data communication unit 510, starts the voice recognition dialogue processing at the voice recognition dialogue starting unit 530, and requests the service contents to the service content retaining server 60 (step 1107) according to the service information transmitted from the client 10.

An example of the method for requesting the service contents is, in a case that the service content information transmitted from the client 10 is an address, to access the address. In a case that the service information transmitted from the client 10 is a service name, there is another method of retrieving an address corresponding to the service name and accessing the address, as an example.

Next, the service content retaining server 60 receives the request from the recognition dialogue server C 50 and transmits the service contents (step 1108). The recognition dialogue server C 50 receives the transmitted service contents at the data communication unit 510, reads into the service contents at the service content reading unit 540 (step 1109), and starts the voice recognition dialogue processing (step 1110).

The process from the step 1110 to the step 1112 is the same as the process from the step 507 to the step 510. In fig. 11, the dotted lines connecting the step 1110 and the step 1111 show that data exchange is performed several times between the terminal and the recognition dialogue server.

In the aforementioned system, an example in which the recognition dialogue selecting server 20 and the recognition dialogue server C 50 connect to a bidirectional network is explained. However, a configuration in which either one is connected to the network is also acceptable.

Each step explained above can be realized by a program operative on a server computer 901. Fig. 12 is a diagram showing a program to execute the voice recognition dialogue method of the embodiment according to the present invention on the server computer 901, and a recording medium 902 in which the program is recorded.

### Industrial Applicability

According to the present invention as explained above, even in a case that a plurality of recognition dialogue servers exist, it is possible to select and determine the optimum recognition dialogue server among the plurality of servers to thereby execute a voice recognition dialogue.

Further, even in a case where processing is required to be performed at a new recognition dialogue server during a dialogue due to various reasons, a client is capable of accessing another appropriate recognition dialogue server automatically, so that the recognition dialogue process can be continued.

## Claims

1. A voice recognition dialogue apparatus comprising:
a plurality of dialogue means for performing a voice recognition dialogue;
transmitting means for transmitting voice information to the dialogue means;
a network which connects the transmitting means and the dialogue means; and
selecting means for selecting one dialogue means among the plurality of dialogue means according to an ability of the transmitting means and abilities of the plurality of dialogue means.

2. A voice recognition dialogue apparatus comprising:
a plurality of dialogue means for performing a voice recognition dialogue;
requesting means for requesting a service to the dialogue means;
transmitting means for transmitting voice information to the dialogue means;
a network which connects the transmitting means, the requesting means and the dialogue means; and
selecting means for selecting one dialogue means among the plurality of dialogue means according to the service and abilities of the transmitting means and abilities of the plurality of dialogue means.

3. A voice recognition dialogue apparatus comprising:
a plurality of dialogue means for performing a voice recognition dialogue;
service retaining means for retaining a service content requested to the dialogue means;
transmitting means for transmitting voice information to the dialogue means;
a network which connects the service retaining means, the transmitting means and the dialogue means; and
selecting means for selecting one dialogue means among the plurality of dialogue means according to the service and abilities of the transmitting means and abilities of the plurality of dialogue means.

4. The voice recognition dialogue apparatus as claimed in claim 1 or 3, wherein the selecting means has functions of transmitting information for specifying selected dialogue means to the transmitting means and exchanging voice information necessary for performing a voice recognition dialogue between the selected dialogue means and the transmitting means.

5. The voice recognition dialogue apparatus as claimed in claim 2, wherein the selecting means has functions of transmitting information for specifying selected dialogue means to the transmitting means and exchanging the service content and voice information between the selected dialogue means, and the requesting means and the transmitting means.

6. The voice recognition dialogue apparatus as claimed in claim 4 or 5, wherein the selecting means has a function of changing one selected dialogue means to another selected dialogue means.

7. The voice recognition dialogue apparatus as claimed in any one of claim 1, 3, 4 or 6, wherein the selecting means has functions of comparing the ability of the transmitting means with the abilities of the plurality of dialogue means and, according to a compared result, determining such dialogue means with a desired ability that an input format of voice information input into the dialogue means and an output format of the voice information output to the transmitting means coincide with.

8. The voice recognition dialogue apparatus as claimed in any one of claim 2, 5 or 6, wherein the selecting means has functions of comparing the service and abilities of the transmitting means with the abilities of the plurality of dialogue means and, according to a compared result, determining such dialogue means with a desired ability that an input format of voice information input into the dialogue means and an output format of the voice information output to the transmitting means coincide with.

9. The voice recognition dialogue apparatus as claimed in claim 1, wherein the voice information output from the transmitting means may be formed of digitized voice data, compressed voice data, or feature vector data.

10. The voice recognition dialogue apparatus as claimed in claim 1, wherein data for determining the ability of the transmitting means includes data of: a CODEC ability, a voice data format, and a recorded/synthesized voice I/O function.

11. The voice recognition dialogue apparatus as claimed in claim 1, wherein data for determining the ability of the dialogue means includes data of: a CODEC ability, a voice data format, a recorded/synthesized voice output function, a service content, a recognition ability and operational information.

12. A voice recognition dialogue apparatus comprising:
a plurality of voice recognition dialogue servers for performing a voice recognition dialogue;
a client for transmitting a service content and voice information requested to the voice recognition dialogue servers;
a voice recognition dialogue selecting server f or selecting one dialogue means among a plurality of dialogue means; and
a network which connects the client, the voice recognition dialogue servers and the voice recognition dialogue selecting server; wherein
the client includes: a data input unit for inputting data of the voice information and the service content, a terminal information storage for storing ability data of the client, a data communication unit for performing communications between the voice recognition dialogue server and the voice recognition selecting server over the network and transmitting the voice information to a selected voice recognition dialogue server, and a controller for controlling an operation of the client,
the voice recognition dialogue selecting server includes: a data communication unit for performing communications between the client and the voice recognition dialogue server over the network, a recognition dialogue server information storage for storing an ability of each of the voice recognition dialogue servers, and a recognition dialogue server determining unit for reading out the ability data of the client stored in the terminal information storage, comparing the ability data with the ability data of the voice recognition dialogue servers stored in the recognition dialogue server information storage, determining at least one voice recognition dialogue server among the plurality of voice recognition dialogue servers, and transmitting information necessary for specifying a determined voice recognition dialogue server to the client, and
the voice recognition dialogue server includes: a voice recognition dialogue executing unit for executing a voice recognition dialogue according to the voice information input from the client, a data communication unit for performing communications between the client and the voice recognition dialogue selecting server over the network, and a controller for controlling an operation of the voice recognition dialogue server.

13. The voice recognition dialogue apparatus as claimed in claim 12, further comprising: a service content retaining server which is connected to the network and retains the service content requested from the client, and a reading unit which is provided in the voice recognition dialogue server and reads into the service content retained in the service content retaining server.

14. The voice recognition dialogue apparatus as claimed in claim 12 or 13, further comprising: process transferring means, provided in the voice recognition dialogue server, for outputting to the voice recognition dialogue selecting server a request for transferring a voice recognition dialogue processing to another voice recognition dialogue server.

15. The voice recognition dialogue apparatus as claimed in claim 12, wherein the voice information output from the client may be formed of digitized voice data, compressed voice data, or feature vector data.

16. The voice recognition dialogue apparatus as claimed in claim 12, wherein data for determining the ability of the client includes data of: a CODEC ability, a voice data format, and a recorded/synthesized voice I/O function.

17. The voice recognition dialogue apparatus as claimed in claim 12, wherein data for determining the ability of the voice recognition dialogue server includes data of: a CODEC ability, a voice data format, a recorded/synthesized voice output function, a service content, a recognition ability and operational information.

18. A voice recognition dialogue selecting method for performing data communications between transmitting means and a plurality of dialogue means over a network and for performing a process of transmitting voice information data output from the transmitting means to specific dialogue means, the method comprising:
a first step of receiving voice information data from the transmitting means;
a second step of requesting ability data of the transmitting means to the transmitting means;
a third step of transmitting the ability data of the transmitting means from the transmitting means;
a fourth step of comparing the ability data from the transmitting means with ability data of the plurality of dialogue means, and determining specific dialogue means according to a compared result,
a fifth step of informing the transmitting means of information for specifying determined dialogue means; and
a sixth step of performing a voice recognition dialogue processing between the transmitting means and the determined dialogue means.

19. The voice recognition dialogue selecting method as claimed in claim 18, further comprising:
a seventh step of transmitting a request, during the voice recognition dialogue processing between the transmitting mean and the dialogue means, for transferring a counterpart of the transmitting means from the dialogue means to another dialogue means;
an eighth step of requesting the ability data of the transmitting means to the transmitting means;
a ninth step of transmitting the ability data of the transmitting means from the transmitting means responding to a request in the eighth step;
a tenth step of comparing the ability data of the transmitting means with the ability data of the plurality of dialogue means, and determining new dialogue means according to a compared result;
an eleventh step of informing the transmitting means of information necessary for specifying dialogue means determined in the tenth step; and
a twelfth step of performing the voice recognition dialogue processing between the dialogue means determined in the tenth step and the transmitting means.

20. A voice recognition dialogue selecting method for performing data communications between transmitting means, a plurality of dialogue means and service retaining means over a network, and for performing a process of transmitting voice information data output from the transmitting means to specific dialogue means, the method comprising:
a first step of receiving a request for a service content including a voice recognition dialogue processing output from the transmitting means;
a second step of requesting ability data of the transmitting means to the transmitting means;
a third step of transmitting the ability data of the transmitting means from the transmitting means;
a fourth step of comparing the ability data of the transmitting means with ability data of the plurality of dialogue means and determining specific dialogue means among the plurality of dialogue means according to a compared result;
a fifth step of informing the transmitting means of information necessary for specifying dialogue means determined in the fourth step;
a sixth step of performing the voice recognition dialogue processing between the transmitting means and the dialogue means determined in the fourth step;
a seventh step of requesting the service content requested from the transmitting means, from the dialogue means determined in the fourth step to the service retaining means;
an eighth step of transmitting the service content requested in the seventh step to the dialogue means determined in the fourth step;
a ninth step of reading into the service content transmitted in the eighth step by the dialogue means determined in the fourth step; and
a tenth step of performing the voice recognition dialogue processing between the transmitting means and the dialogue means determined in the fourth step according to the service content read into.

21. The voice recognition dialogue selecting means as claimed in claim 20, further comprising:
an eleventh step of transmitting a request, during the voice recognition dialogue processing between the transmitting means and the dialogue means, for transferring a counterpart of the transmitting means from the dialogue means to another dialogue means;
a twelfth step of requesting the ability data of the transmitting means to the transmitting means;
a thirteenth step of transmitting the ability data of the transmitting means from the transmitting means;
a fourteenth step of comparing the ability data of the transmitting means with the ability data of the plurality of dialogue means, and determining new dialogue means according to a compared result;
a fifteenth step of informing the transmitting means of information necessary for specifying dialogue means determined in the fourteenth step; and
a sixteenth step of performing a voice recognition dialogue processing between the dialogue means determined in the fourteenth step and the transmitting means.

22. The voice recognition dialogue selecting method as claimed in claim 18, wherein as the voice information, voice information including digitized voice data, compressed voice data, or feature vector data is used.

23. The voice recognition dialogue selecting method as claimed in claim 18, wherein data for determining the ability of the transmitting means includes data of: a CODEC ability, a voice data format, a recorded/synthesized voice I/O function and a service content.

24. The voice recognition dialogue selecting method as claimed in claim 18, wherein data for determining the ability of the dialogue means includes data of: a CODEC ability, a voice data format, a recorded/synthesized voice output function, a service content, a recognition ability and operational information.

25. A voice recognition dialogue selecting apparatus for performing data communications between transmitting means and a plurality of dialogue means over a network, the apparatus comprising, selecting means for selecting specific dialogue means and transmitting voice information data output from the transmitting means to the specific dialogue means, wherein
when selecting, the selecting means specifies the dialogue means according to an ability of the transmitting means and abilities of the plurality of dialogue means.

26. A voice recognition dialogue selecting apparatus for performing data communications between transmitting means and a plurality of dialogue means over a network, and for performing a process of selecting specific dialogue means and transmitting voice information data output from the transmitting means to the specific dialogue means, the apparatus comprising:
first means for receiving voice information from the transmitting means and data indicating that the dialogue means is to be changed;
second means for requesting ability data of the transmitting means to the transmitting means;
third means for transmitting the ability data from the transmitting means responding to a request from the second means;
fourth means for comparing the ability data of the transmitting means with ability data of the plurality of the dialogue means, and determining dialogue means according to a compared result; and
fifth means for informing the transmitting means of information for specifying dialogue means determined in the fourth means.

27. The voice recognition dialogue selecting apparatus as claimed in claim 26, wherein the voice information includes digitized voice data, compressed voice data, or feature vector data.

28. The voice recognition dialogue selecting apparatus as claimed in claim 26, wherein data for determining the ability of the transmitting means includes data of: a CODEC ability, a voice data format, a recorded/synthesized voice I/O function and a service content.

29. The voice recognition dialogue selecting apparatus as claimed in claim 26, wherein data for determining the ability of the dialogue means includes data of: a CODEC ability, a voice data format, a recorded/synthesized voice output function, a service content, a recognition ability and operational information.

30. A recording medium for a voice recognition dialogue selecting program, in which a voice recognition dialogue selecting program, for performing data communications between transmitting means and a plurality of dialogue means over a network and for performing a process of transmitting voice information data output from the transmitting means to specific dialogue means, is recorded, the program comprising:
a first step of receiving the voice information data from the transmitting means;
a second step of requesting ability data of the transmitting means to the transmitting means;
a third step of transmitting the ability data of the transmitting means from the transmitting means;
a fourth step of comparing the ability data from the transmitting means with ability data of the plurality of dialogue means, and determining specific dialogue means according to a compared result;
a fifth step of informing the transmitting means of information for specifying determined dialogue means; and
a sixth step of performing a voice recognition dialogue processing between the transmitting means and the determined dialogue means.

31. The recording medium for the voice recognition dialogue selecting program as claimed in claim 30, in which the voice recognition dialogue selecting program is recorded, the program further comprising:
a seventh step of transmitting a request, during the voice recognition dialogue processing between the transmitting means and the dialogue means, for transferring a counterpart of the transmitting means from the dialogue means to another dialogue means;
an eighth step of requesting the ability data of the transmitting means to the transmitting means;
a ninth step of transmitting the ability data of the transmitting means from the transmitting means responding to a request in the eighth step;
a tenth step of comparing the ability data of the transmitting means with the ability data of the plurality of dialogue means, and determining new dialogue means according to a compared result;
an eleventh step of informing the transmitting means of information necessary for specifying dialogue means determined in the tenth step; and
a twelfth step of performing the voice recognition dialogue processing between the dialogue means determined in the tenth step and the transmitting means.

32. A recording medium for a voice recognition dialogue selecting program, in which a voice recognition dialogue selecting program, for performing data communications between transmitting means, a plurality of dialogue means and service retaining means over a network and for performing a process of transmitting voice information data output from the transmitting means to specific dialogue means, is recorded, the program comprising:
a first step of receiving a request for a service content including a voice recognition dialogue processing output from the transmitting means;
a second step of requesting ability data of the transmitting means to the transmitting means;
a third step of transmitting the ability data of the transmitting means from the transmitting means;
a fourth step of comparing the ability data of the transmitting means with ability data of the plurality of dialogue means, and determining specific dialogue means among the plurality of dialogue means according to a compared result;
a fifth step of informing the transmitting means of information necessary for specifying dialogue means determined in the fourth step; and
a sixth step of performing the voice recognition dialogue processing between the transmitting means and the dialogue means determined in the fourth step;
a seventh step of requesting the service content requested from the transmitting means, from the dialogue means determined in the fourth step to the service retaining means;
an eighth step of transmitting the service content requested in the seventh step to the dialogue means determined in the fourth step;
a ninth step of reading into the service content transmitted in the eighth step by the dialogue means determined in the fourth step; and
a tenth step of performing the voice recognition dialogue processing between the transmitting means and the dialogue means determined in the fourth step according to the service content read into.

33. The recording medium for the voice recognition dialogue selecting program as claimed in claim 32, in which the voice recognition dialogue selecting program is recorded, the program further comprising:
an eleventh step of transmitting a request, during the voice recognition dialogue processing between the transmitting means and the dialogue means, for transferring a counterpart of the transmitting means from the dialogue means to another dialogue means;
a twelfth step of requesting the ability data of the transmitting means to the transmitting means;
a thirteenth step of transmitting the ability data of the transmitting means from the transmitting means;
a fourteenth step of comparing the ability data of the transmitting means with the ability data of the plurality of dialogue means, and determining new dialogue means according to a compared result;
a fifteenth step of informing the transmitting means of information necessary for specifying dialogue means determined in the fourteenth step; and
a sixteenth step of performing the voice recognition dialogue processing between the dialogue means determined in the fourteenth step and the transmitting means.

34. The recording medium for the voice recognition dialogue selecting program as claimed in claim 30, wherein as the voice information, voice information including digitized voice data, compressed voice data, or feature vector data is used.

35. The recording medium for the voice recognition dialogue selecting program as claimed in claim 30, wherein data for determining the ability of the transmitting means includes data of: a CODEC ability, a voice data format, a recorded/synthesized voice I/O function and a service content.

36. The recording medium for the voice recognition dialogue selecting program as claimed in claim 30, wherein data for determining the ability of the dialogue means includes data of: a CODEC ability, a voice data format, a recorded/synthesized voice output function, a service content, a recognition ability and operational information.
